# EUROPEAN PATENT APPLICATION

(11) **EP 4 571 400 A1**
(43) Date of publication of application: **18.06.2025**
(21) Application number: 23852320.3
(22) Date of filing: 19.07.2023
(51) Int. Cl.: G02C 7/02, G02B 1/115, G02B 1/14, G02C 11/02

(54) **SPECTACLE LENS AND SPECTACLES**

(30) Priority: 10.08.2022 JP 2022127741
(71) Applicant: Hoya Lens Thailand Ltd., Pathumthani 12130 (TH)
(72) Inventor: OOKUBO Shigeki, Tokyo 160-8347 (JP)
(74) Representative: Betten & Resch
(86) International application number: PCT/JP2023/026444
(87) International publication number: WO 2024/034341

(57) **Abstract**

Provided are a spectacle lens 1 and related features, wherein the spectacle lens 1 is provided with a lens base material with an optical surface and an anti-reflective film coating the optical surface of the lens base material, the anti-reflective film has a multilayer structure including a low refractive index layer and a high refractive index layer layered on each other, the anti-reflective film is provided with a reactive layer that has relatively higher reactivity to ultrashort pulse laser irradiation than the other layers included in the anti-reflective film, and a marking 2M is applied in a cut lens-like shape in a material removal area formed by at least partially removing one or more specific layers including a topmost layer of the multilayer structure, wherein in the marking, the material removal area is visible due to visible light as a result of exposure of the high refractive index layer below the reactive layer or exposure of the reactive layer having partially remained.

## Description

### Technical Field

The present disclosure relates to a spectacle lens and spectacles.

### Description of related art

It is known to apply coloring or a design to a portion of a spectacle lens corresponding to the inside of a spectacle frame (for example, see Patent Documents 1 and 2). In the present description, spectacle frames will also be referred to simply as frames, and rims of such spectacle frames (a member into which a spectacle lens that has been edged is fit), in particular, will be discussed. Spectacle lenses that have been edged will also be referred to as cut lenses. Edging will also be referred to as being cut to frame.

### Prior art document

### Patent document

[Patent Document 1] Japanese Patent Publication No. 2004-004727
[Patent Document 2] Japanese Patent Publication No. 2007-058146

### Summary of the invention

### Problem to be solved by the invention

Currently, the majority of spectacle lenses are made of plastic, and improvements in materials have provided sufficient strength to prevent breaking. This has stopped rims from being strictly necessary for protective purposes. The frame, which includes the rim, will enter the field of vision of the wearer. As a result, the wearer may feel that the rim is an unnecessary obstruction to their field of vision. Furthermore, there is also demand for lighter spectacles.

Under these conditions, it is preferable for the weight of the frame and the weight of decorative material on the spectacles to be reduced as much as possible. In light of these conditions, thin frames and lightweight frames have been developed. Examples of lightweight frames that have been developed include rimless frames, which have no rim, and half-rim frames, where the rim is on only a portion of the frame (for example, the lower half of the frame).

In contrast, it has been found that there is also demand for rimmed spectacles among many users. The inventor having diligently studied this demand has found that a rim provides the following advantage.

That is, it was found that besides maintaining the strength of spectacles, a rim has the effect of accentuating the contours of a cut lens and providing a distinctive look to the face of the wearer.

An objective of the present disclosure is to provide a technique for appropriately accentuating the contours of a cut lens and improving the outer appearance, regardless of whether or not there is a rim.

### Means for solving the problem

According to a first aspect of the present disclosure, there is provided a spectacle lens provided with
a lens base material with an optical surface and
an anti-reflective film coating the optical surface of the lens base material, wherein
the anti-reflective film has a multilayer structure including a low refractive index layer and a high refractive index layer layered on each other,
the anti-reflective film includes a reactive layer that has relatively higher reactivity to ultrashort pulse laser irradiation than the other layers included in the anti-reflective film, and
a marking is applied in a cut lens-like shape in a material removal area formed by at least partially removing one or more specific layers including a topmost layer of the multilayer structure, wherein in the marking, the material removal area is visible due to visible light as a result of exposure of the high refractive index layer below the reactive layer or exposure of the reactive layer having partially remained.

According to a second aspect of the present disclosure, there is provided the spectacle lens according to the first aspect, wherein
the material removal area also forms a decorative pattern other than the cut lens-like marking.

According to a third aspect of the present disclosure, there is provided the spectacle lens according to the second aspect, wherein
the decorative pattern is applied on an end on the inside of the cut lens-like marking.

According to a fourth aspect of the present disclosure, there is provided the spectacle lens according to any one of the first to third aspects, wherein
the cut lens-like marking is ring-shaped.

According to a fifth aspect of the present disclosure, there are provided spectacles provided with
cut spectacle lenses to which an edge outline which outlines an outer edge is applied and
a frame into which the cut spectacle lenses are fit, wherein
each of the spectacle lenses is provided with
a lens base material with an optical surface, and
an anti-reflective film coating the optical surface of the lens base material,
the anti-reflective film has a multilayer structure including a low refractive index layer and a high refractive index layer layered on each other,
the anti-reflective film includes a reactive layer that has relatively higher reactivity to ultrashort pulse laser irradiation than the other layers included in the anti-reflective film,
a marking is applied as the edge outline in a material removal area formed by at least partially removing one or more specific layers including a topmost layer of the multilayer structure, wherein in the marking, the material removal area is visible due to visible light as a result of exposure of the high refractive index layer below the reactive layer or exposure of the reactive layer having partially remained, and
the edge outline is visible when observed from an object side of the spectacle lenses in a state in which the spectacle lenses are fit into the frame.

According to a sixth aspect of the present disclosure, there are provided the spectacles according to the fifth aspect, wherein
the material removal area also forms a decorative pattern other than the edge outline.

According to a seventh aspect of the present disclosure, there are provided the spectacles according to the sixth aspect, wherein
the decorative pattern is applied on an end on the inside of the edge outline.

According to an eighth aspect of the present disclosure, there are provided the spectacles according to any one of the fifth to seventh aspects, wherein
the edge outline is ring-shaped.

According to a ninth aspect of the present disclosure, there are provided the spectacles according to any one of the fifth to seventh aspects, wherein
the frame is rimless or has a half-rim, and
the edge outline is marked as an imitation rim at least at areas where the rim is not present.

### Advantage of the invention

The present disclosure appropriately accentuates the contours of a cut lens and improves the outer appearance, regardless of whether or not there is a rim.

### Brief description of the drawings

FIG. 1A is a front view of a spectacle lens according to one embodiment of the present disclosure.
FIG. 1B is a bottom view of the spectacle lens according to the one embodiment of the present disclosure.
FIG. 2A is a front view of a spectacle lens according to another embodiment of the present disclosure.
FIG. 2B is a partial schematic front view of spectacles after the spectacle lens of FIG. 2A is cut and fit into a frame.
FIG. 2C is a partial schematic front view of spectacles after the spectacle lens of FIG. 2A is cut and fit into a half-rim frame. FIG. 2C is a front view of a spectacle lens according to another embodiment of the present disclosure.
FIG. 3A is a front view of a spectacle lens according to another embodiment of the present disclosure.
FIG. 3B is a partial schematic front view of spectacles after the spectacle lens of FIG. 3A is cut and fit into a half-rim frame.
FIG. 4 is a front view of a spectacle lens according to another embodiment of the present disclosure.
FIG. 5 is a front view of a spectacle lens according to another embodiment of the present disclosure.
FIG. 6 is a front view of a spectacle lens according to another embodiment of the present disclosure.
FIG. 7 is an explanatory view for explaining a favorable example of an edge outline based on FIG. 4.
FIG. 8 is a front view of a processing example of the spectacle lens according to one embodiment of the present disclosure.
FIG. 9 is a view of a specific example, based on FIG. 1A, in which a decorative pattern is provided at an end of a cut lens shape (for example, at least any one of the four corners) on the inside of an edge outline.
FIG. 10 is a flowchart showing an example of the steps of a method for manufacturing a spectacle lens according to one embodiment of the present disclosure.
FIG. 11 is a side cross-sectional view of an example of a layered structure of a thin film on a spectacle lens according to one embodiment of the present disclosure.
FIG. 12 is an explanatory view of a schematic configuration example of a laser processing device used in the method for manufacturing a spectacle lens according to one embodiment of the present disclosure.
FIG. 13 is an explanatory view of a configuration example of the principal constituent parts of the spectacle lens according to one embodiment of the present disclosure.

### Detailed description of the invention

### <Gist of the present embodiment>

Embodiments of the present disclosure will be described below based on the drawings.

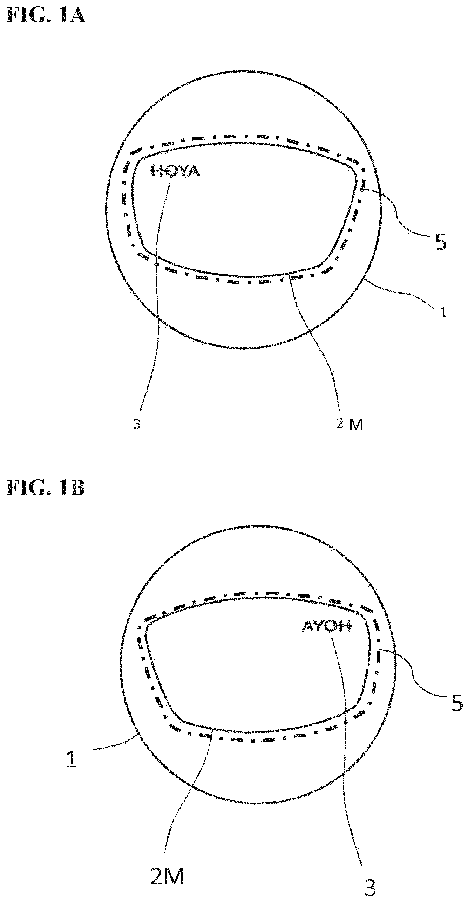

FIG. 1A is a front view of a spectacle lens according to one embodiment of the present disclosure.

FIG. 1B is a bottom view of the spectacle lens according to the one embodiment of the present disclosure.

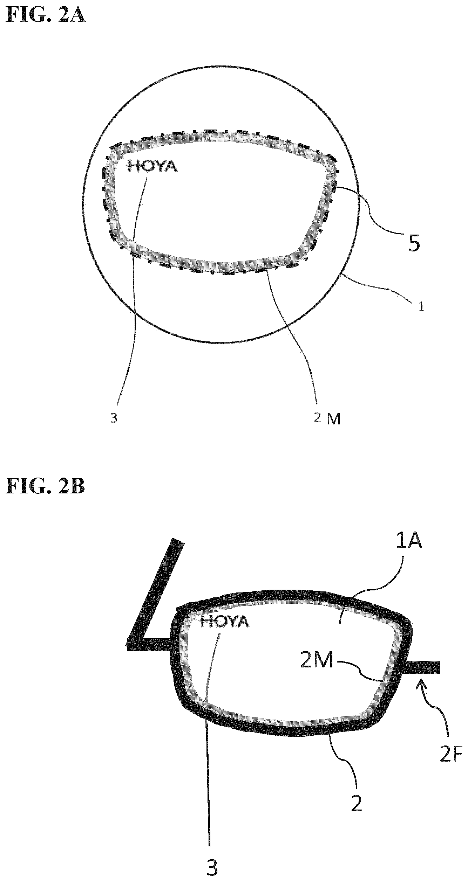

FIG. 2A is a front view of a spectacle lens according to another embodiment of the present disclosure.

FIG. 2B is a partial schematic front view of spectacles after the spectacle lens of FIG. 2A is cut and fit into a full-rim frame.

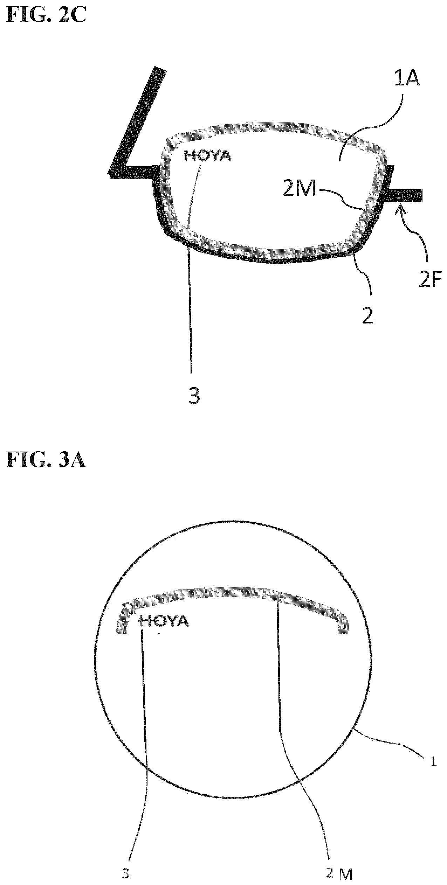

FIG. 2C is a partial schematic front view of spectacles after the spectacle lens of FIG. 2A is cut and fit into a half-rim frame.

FIG. 3A is a front view of a spectacle lens according to another embodiment of the present disclosure.

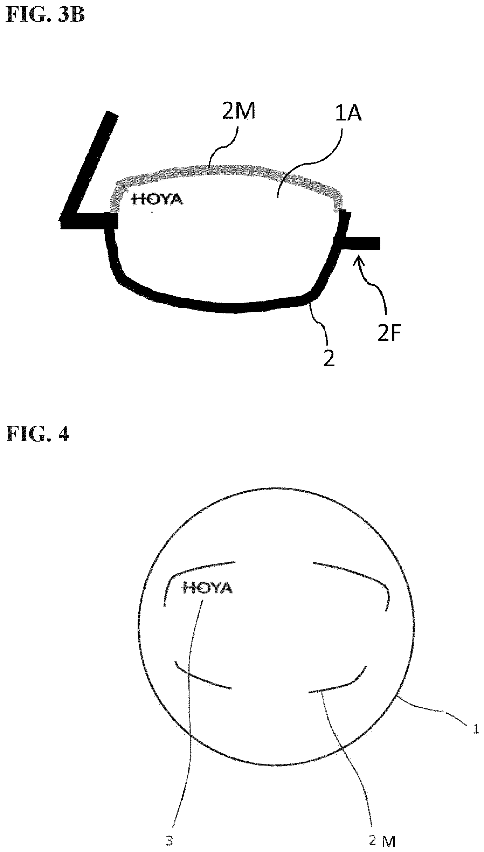

FIG. 3B is a partial schematic front view of spectacles after the spectacle lens of FIG. 3A is cut and fit into a half-rim frame.

FIG. 4 is a front view of a spectacle lens according to another embodiment of the present disclosure.

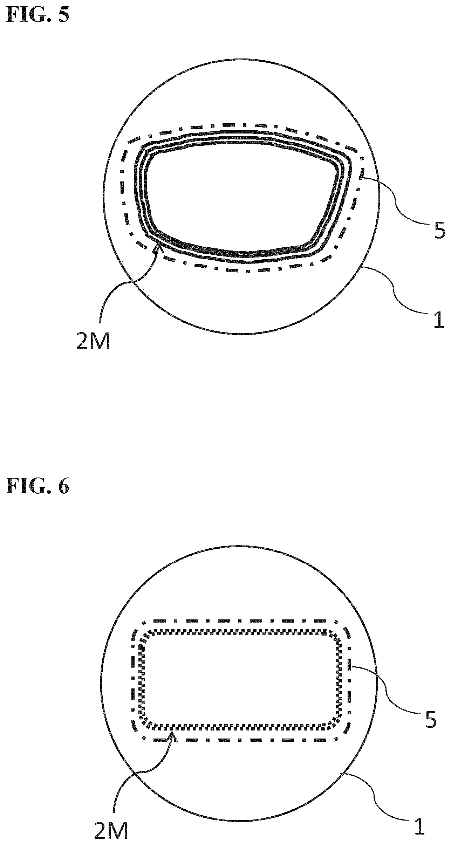

FIG. 5 is a front view of a spectacle lens according to another embodiment of the present disclosure.

FIG. 6 is a front view of a spectacle lens according to another embodiment of the present disclosure.

Unless otherwise mentioned specifically, the description discusses a third person perspective of the spectacles in a worn state as seen from the front.

In the description, the side of the spectacle lens by the optical center will be referred to as the inside, and the side of the spectacle lens by the outermost edge will be referred to as the outside. The description provides an example in which the optical center matches the geometric center and centration center.

Hereinafter, the optical center will also be referred to as the lens center.

The frame center side of a cut lens that has been cut to frame will be referred to as the inside, and the side of the cut lens by the outermost edge will be referred to as the outside. The contour of the outermost edge of the cut lens matches the contour of a cut lens shape 5 of a spectacle lens 1 before being cut to frame. The frame center, as the name suggests, is the center position of the cut lens in the spectacles when worn as seen from the front by a third person (that is, the region on the inside of the rim).

The center position of the cut lens may be the geometric center of a rectangular shape (boxing) that circumscribes and encloses the cut lens. The frame center may match the optical center and the centration center.

Later stipulations regarding a spectacle lens that use the terms "lens center" can be applied to spectacles with a frame into which cut lenses that have been cut to frame are fit by substituting "lens center" with "frame center".

The spectacle lens according to the present embodiment comprises
a lens base material with an optical surface and
an anti-reflective film coating the optical surface of the lens base material, wherein
the anti-reflective film has a multilayer structure including a low refractive index layer and a high refractive index layer layered on each other,
the anti-reflective film includes a reactive layer that has relatively higher reactivity to ultrashort pulse laser irradiation than the other layers included in the anti-reflective film, and
a marking 2M (or patterning; hereinafter collectively referred to as marking) is applied in a cut lens-like shape in a material removal area formed by at least partially removing one or more specific layers including a topmost layer of the multilayer structure, wherein in the marking, the material removal area is visible due to visible light as a result of exposure of the high refractive index layer below the reactive layer or exposure of the reactive layer having partially remained.

Furthermore, the application of the marking 2M in a cut lens-like shape can also constitute a method for manufacturing a spectacle lens according to the present embodiment.

Of the recitations above, specific, preferred, and modified examples of the lens base material and anti-reflective film will be described in detail later under <specific examples of present embodiment>, and the marking 2M, one of the significant features of the present embodiment, will be described below.

In the present embodiment, a marking is formed by partially removing the anti-reflective film. This marking 2M has a cut lens-like shape. The "cut lens-like" may or may not be the predetermined cut lens shape 5 for a single uncut spectacle lens. In the description, "cut lens-like" refers to the shape of a spectacle lens in a front view that can be used as a cut lens. Specifically, the cut lens-like shape is mainly formed from arcs (concave toward the lens center) and/or straight lines. If the predetermined cut lens shape is complex, curved lines other than arcs may be used to match the cut lens shape. In other words, a "cut lens-like marking 2M" excludes icons (logos and brand marks). Numbers such as product numbers, text characters, etc., are also excluded. Note that text characters, numbers, or an icon may be provided on the spectacle lens of the present embodiment as a decorative pattern 3 (to be described later) separate from the marking 2M.

Furthermore, the cut lens-like marking 2M may be formed along the cut-to-frame outer edge shape of the lens as a band-like region with a specific width in the vicinity of the outer edge. As will be described later, the cut lens-like marking 2M may also be formed along a portion of the cut-to-frame outer edge of the lens. In that case, the cut lens-like marking 2M may be formed as a band-like region having a desired width and length, as will be described later.

When the cut lens shape 5 is determined for a single uncut spectacle lens, the cut lens-like marking 2M may also be referred to as an "edge outline 2M" of the cut lens shape 5. That is, in the present embodiment, it can also be said that the edge outline 2M is marked on an uncut spectacle lens.

Each of the features of the edge outline 2M to be described later also apply to the marking 2M. Hereinafter, for simplicity's sake, the explanation will primarily focus on the edge outline 2M.

The "edge outline 2M" in the description, as the name suggests, is a line outlining the contour of the cut lens shape 5, which indicates the planned cutting position. The edge outline 2M may have a similar shape to the contour of the cut lens shape 5.

However, being "similar" does not strictly mean having identical dimensional proportions. Since cut lenses are generally not perfect circles and have a different height and width, the distance between the contour of the cut lens shape 5 and the edge outline 2M will differ on the top and left sides, for example, when simply expanded or shrunk. Therefore, the edge outline 2M may have a similar shape to the contour of the cut lens shape 5 with some added degree of variation such that there is within about a 10% difference in the distance between the contour of the cut lens shape 5 and the edge outline 2M.

Note that the contour of the cut lens shape 5 indicating the planned cutting position may or may not be marked on the spectacle lens. Marking the edge outline 2M to overlap the contour of the cut lens shape 5 will result in the contour of the cut lens shape 5 being marked on the spectacle lens. For example, if the width of the edge outline 2M in the spectacle lens 1 according to the present embodiment is increased, the edge outline 2M on a spectacle lens 1A after being fit into a frame 2F will stick out from the rim shape (FIG. 2A, FIG. 2B). On the other hand, the edge outline 2M may be marked in such a manner as to not contact the cut lens shape 5 (to be more precise, marked so as to be on the inside of and not contacting the cut lens shape 5) (FIG. 1A, FIG. 1B, FIG. 5, FIG. 6).

On the other hand, the edge outline may be marked at a position that does not overlap the contour of the cut lens shape 5 and is offset to the inside of the contour of the cut lens shape 5. However, given the name "edge outline", it should not be separated too far from the contour of the cut lens shape 5. The distance of separation (shortest distance) from the contour of the cut lens shape 5 to the edge outline is, in increasing preference, 3.0 mm or shorter, 2.0 mm or shorter, or 1.0 mm or shorter.

The "edge outline 2M" in the description, like the marking 2M, is mainly formed from arcs and/or straight lines. The edge outline 2M may be a closed loop (a ring shape) or may be an open loop (where part of the ring-shaped edge outline is removed). The open loop can also be said to be the edge outline when only a part thereof is provided.

As a specific example of the open loop, the edge outline 2M may be marked only partially on the contour of the cut lens as depicted in FIG. 4. The edge outline 2M when being marked in this manner may, for example, be placed at four locations (four corners) as is shown in FIG. 4, or also may be placed at other locations.

The "edge outline 2M" in the description refers to a portion visible to the eye. For example, one such case is when the closed loop forming the edge outline 2M is visible as a dashed line. The solid portions of the dashed line are lines of exposed portions of the anti-reflective film which have been exposed in lines by continuously etching dots by laser processing, which will be described later. The gaps in the dashed line are where there has been no exposure. Because of the differences in the state of etching, a dashed edge outline 2M can be seen in a front view of the spectacle lens. The "edge outline 2M" in the description refers to the line-shaped portions that have actually been etched. Note that when the spectacle lens 1 is fitted into a frame, the edge outline 2M would be visible when observed from the object side of the spectacle lens 1.

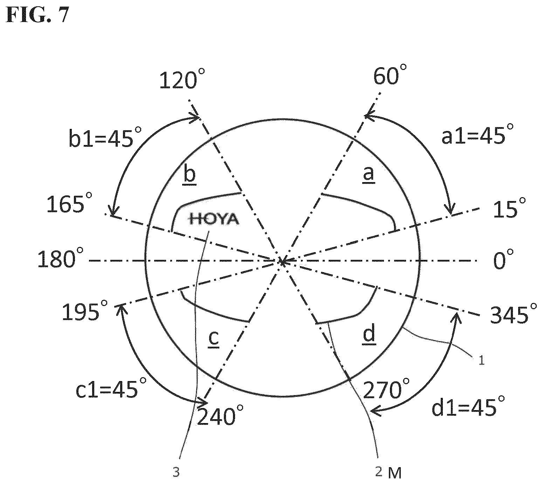

For example, an explanation will be provided using FIG. 7.

FIG. 7 is an explanatory view for explaining a favorable example of the edge outlines based on FIG. 4.

In FIG. 7, the description considers an edge outline 2M to be formed at a fan-shaped region a in the range of rotational angles 15° to 60° when being rotated counter-clockwise from 0°, which is defined as the right side of the horizontal direction as seen from the lens center of an uncut spectacle lens. Similarly, the description considers an edge outline 2M to be formed at a fan-shaped region b in the range of rotational angles 120° to 165°, a fan-shaped region c in the range of rotational angles 195° to 240°, and a fan-shaped region d in the range of rotational angles 300° to 345°. Each of fan-shaped regions a to d have a central angle of 45°. The central angles are expressed as a1 to d1.

That is, the "edge outline 2M" refers to an etched portion continuously connecting the two sides of one fan-shaped region centered at the lens center. In FIG. 7, there are multiple edge outlines 2M (each for one of the fan-shaped regions a to d, for a total of four). By extending each edge outline 2M, a closed ring shape can be formed. Each edge outline 2M in FIG. 7 can also be said to be a solid line portion of a dashed line.

That is, in the example in this paragraph, the edge outlines 2M are provided throughout the fan-shaped regions, which have a total central angle of 180° (a1 + b1 + c1 + d1 = 45° × 4).

Note that a spectacle lens will always have a hidden marking and that the left-right (horizontal) direction, and the up-down (vertical direction) by extension, is identifiable when the lens is fit into a frame.

Under this definition for the edge outline 2M, the edge outline 2M may be provided in the present embodiment throughout fan-shaped regions having a total central angle of 60° or more (preferably, in increasing order of preference, 90° or more, 120° or more, 150° or more, 180° or more, 210° or more, 240° or more, 270° or more, 300° or more, or 330° or more) in the entire spectacle lens.

The edge outline 2M may be the solid portion of a dashed line as mentioned earlier, a solid line itself, or the solid line portion (for example, dots in laser processing) in a dotted line. There may be a single line or multiple lines (see FIG. 5). If there are multiple lines, the thickness of the lines may be changed. Furthermore, the lines may include different types of lines, like those described above. Furthermore, the edge outline may be provided in a checkerboard pattern (hereinafter referred to as a checker pattern) constituted by the solid portion and gaps of a dashed line alternating in the vertical direction, as shown in FIG. 6.

As a specific value for the width of the edge outline 2M (when the edge outline is formed from multiple lines, the minimum width between the outermost portion of the outermost line and the innermost portion of the innermost line), the minimum width of the line may be 1.0 mm or greater, for example. There is no limit to the maximum value, but a value of 3.0 mm or less, for example, may be set.

The following advantageous effects are exhibited by employing these features.

That is, these features can improve the aesthetic appeal of the spectacle lens 1A after being edged (after being fit into a frame). Besides maintaining the strength of the spectacles, the rim has the effect of accentuating the contours of cut lenses and thereby providing a distinctive look to the face of the wearer. By employing the above features, the edge outline will function as a so-called imitation rim and accentuate the contour of cut lenses in even rimless spectacles and improve their visual appeal.

That is, it is possible to obtain spectacles with a substitute rim that eliminates the weight and field of vision constraints imposed by existing rims while also being provided with the functions of a rim in outer appearance.

Alternatively, the above features can also be applied in the form of an unobtrusive imitation rim with less of a presence than existing rims.

Furthermore, the above features can also be applied together with an existing rim to make it possible to alter the feel of the rim, provide greater emphasis to the presence of the rim, etc.

The degree of emphasis can be chosen, as appropriate, according to the dimensions (thickness) of the imitation rim.

The above advantageous effects would also be applicable to spectacles provided with a frame and spectacle lenses having marked edge outlines outlining the outer edge. Furthermore, the frame may be a rimless or half-rim frame, and the edge outline may be marked as an imitation rim at least at locations where there is no rim (FIG. 2A, FIG. 3A, FIG. 3B).

Furthermore, the following advantageous effects can also be achieved.

In the past, if there had been a defect on a spectacle lens before edging, it would not have been possible to identify whether the defect fell within the area of the cut lens until edging was carried out. Therefore, to be thorough, all of a spectacle lens with a defect would have to be discarded prior to edging.

On the other hand, if the lens was the spectacle lens according to the present embodiment, the edge outline 2M would be present at the time of edging, and it will suffice to discard the spectacle lens only when there is a defect on the inside of the edge outline 2M. As a result, it is possible to use spectacle lenses that would have been discarded in the past.

### <Specific examples of present embodiment>

The spectacle lens according to the present embodiment has an object-side surface and an eye-side surface as optical surfaces.

The "object-side surface (object surface)" is the surface on the object side of the spectacle lens when the spectacles that the lens is provided in are worn by a wearer. The "eye-side surface (eye surface)" is the opposite, that is, the surface on the eye side of the spectacle lens when the spectacles that the lens is provided in are worn by the wearer. Typically, the object-side surface is a convex surface and the eye-side surface is a concave surface, that is, a spectacle lens is typically a meniscus lens. This is likewise the case for the spectacle lens after edging (cut lens).

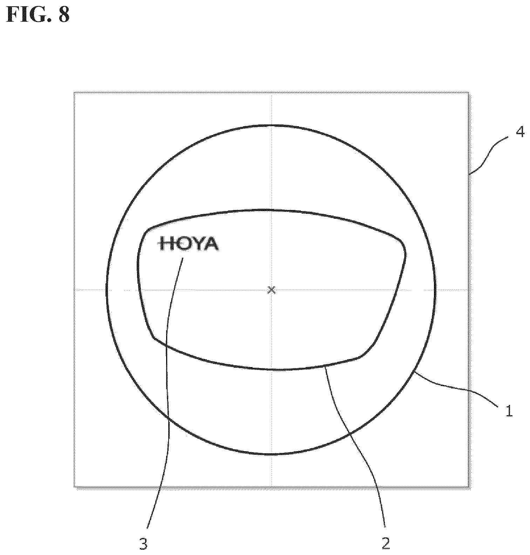

FIG. 8 is a front view of a processing example of the spectacle lens according to the present embodiment.

In the present embodiment, the spectacle lens 1 with a front view circular shape (with an outer diameter of, for example, Φ 60-80 mm) is edged (cut to frame) so that the lens outer shape matches a rim shape 2 of a spectacle frame worn by a wearer.

In the present embodiment, the edge outline 2M is marked on the spectacle lens before edging.

In addition, the example used in the present embodiment is one in which the decorative pattern 3 representing a logo or brand mark or other icon, text characters, symbol, design, etc., is marked on an optical surface so as to be within the lens region after being cut to frame.

In the description, the "decorative pattern 3" refers to a separate pattern from the edge outline 2M. In the present embodiment, both are created under the same work processes.

The decorative pattern may be provided at an end of the cut lens shape 5 (for example, at least any one of the four corners) on the inside of the edge outline. In addition to the edge outline according to the present embodiment demonstrating the function as an imitation rim, the decorative pattern 3 will also provide a distinctive look when provided at the end, further improving the visual appeal.

As part of the definition of the aforementioned end, at least part of the decorative pattern 3 may be present on the outside of the inner circumscribed circle of the cut lens, which would be centered at the frame center (in the case of the spectacle lens before edging, the lens center).

In other words, at least part of the decorative pattern 3 may be present on the inside of the marking 2M and the outside of the inner circumscribed circle of the marking 2M.

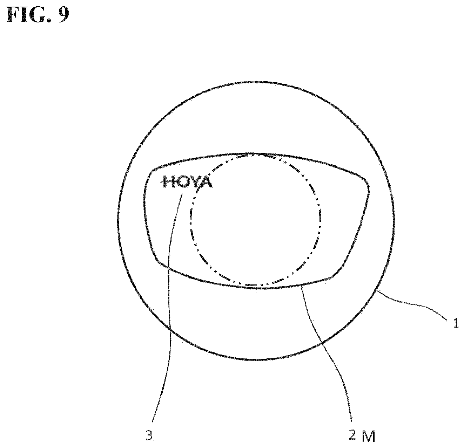

This arrangement is depicted in FIG. 9.

FIG. 9 is a view of a specific example, based on FIG. 1A, in which the decorative pattern is provided at an end of the cut lens shape 5 (for example, at least any one of the four corners) on the inside of the edge outline.

In FIG. 9, at least the text characters "HOY" of the decorative pattern 3 are on the outside of the inner circumscribed circle (the double-dot-dashed line in the figure).

It is conceivable to apply the marking by means of, for example, laser irradiation etching, which allows precise control of the irradiation position based on digital data. However, it is undesirable for the marking to cause deterioration in lens quality and function. Therefore, in the present embodiment, the edge outline 2M and decorative pattern 3 are marked using the processing steps explained below.

### [1] Method for manufacturing spectacle lens

Here, the steps for processing a spectacle lens including marking an edge outline 2M and decorative pattern 3, that is, the steps for a method of manufacturing a spectacle lens according to the present embodiment, will be specifically explained.

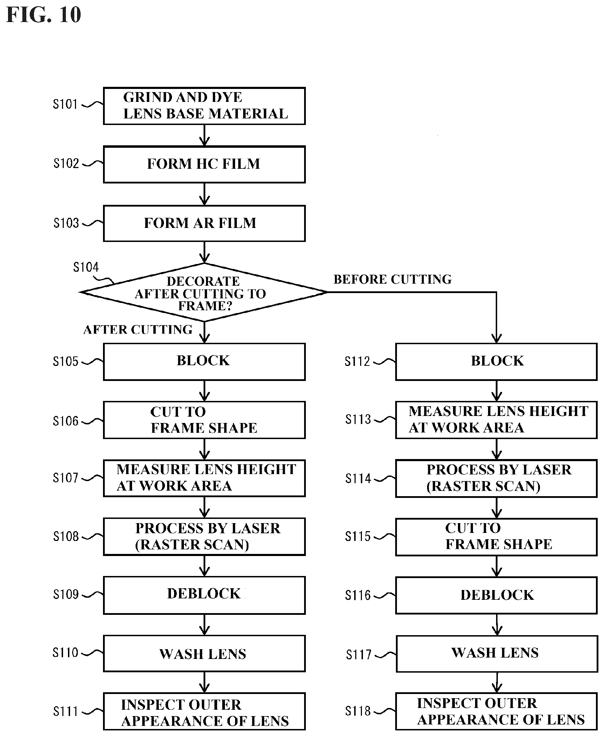

FIG. 10 is a flowchart showing an example of the steps of the method for manufacturing a spectacle lens according to the present embodiment.

To manufacture a spectacle lens, first, a lens base material serving as an optical base material is prepared, and the lens base material is ground according to prescription information of a spectacle wearer and dyed if necessary (step 101; hereinafter "step" is abbreviated as the letter "S").

As the lens base material, a resin material having a refractive index (nD) of about 1.50 to 1.74 is used, for example. Specifically, examples of the resin material include allyl diglycol carbonate, urethane-based resin, polycarbonate, thiourethane-based resin, and episulfide resin. However, instead of these resin materials, the lens base material may be composed of other resin materials that provide a desired degree of refraction or may be composed of inorganic glass. Furthermore, the lens base material has an optical surface for forming a specific lens shape on each of the object-side surface and the eye-side surface. The specific lens shape may form any of a single focal lens, a multifocal lens, a progressive power lens, etc., and in any of these examples, each optical surface is formed from a curved surface specified based on the prescription information of the spectacle wearer. While these optical surfaces are formed by grinding, for example, the optical surfaces may also be cast (molded) products that do not require grinding.

Note that the lens base material may be ground and dyed using known techniques, and detailed explanations will be omitted here.

Thereafter, a hard coat film (HC film) is formed on at least one optical surface of the lens base material, preferably on both optical surfaces (S102).

The HC film is, for example, a film formed using a curable material containing a silicon compound and has a thickness of about 3 µm to 4 µm. The refractive index (nD) of the HC film is close to the refractive index of the material of the lens base material described above, for example, about 1.49 to 1.74, and the film structure is selected according to the material of the lens base material. Such an HC film can improve the durability of the spectacle lens.

The HC film may be formed, for example, by a dipping method using a solution in which a curable material containing a silicon compound is dissolved.

After the HC film is formed, an anti-reflection film (AR film) is subsequently formed over the HC film (S103).

The AR film is a film having a multilayer structure in which films with different refractive indexes are layered and prevents reflection of light via interference. Specifically, the AR film has a multilayer structure in which a low refractive index layer and a high refractive index layer are layered. The low refractive index layer is composed of silicon dioxide (SiO₂) having a refractive index of about 1.43 to 1.47, for example.

Further, the high refractive index layer is composed of a material having a higher refractive index than the low refractive index layer and is formed using, for example, zirconium oxide (ZrO₂), tin oxide (SnO₂), niobium oxide (Nb₂O₅), tantalum oxide (Ta₂O₅), titanium oxide (TiO₂), yttrium oxide (Y₂O₃), aluminum oxide (Al₂O₃), mixtures thereof (e.g., indium tin oxide (ITO)), etc.

Among these, a high refractive index layer containing Sn and O has greater reactivity to ultrashort pulse lasers, which will be described later, than other layers, and thus functions as a reactive layer. Specifically, the above SnO₂ layer and ITO layer correspond to this high refractive index layer.

The "reactive layer" in the description refers to a layer having low excitation energy when irradiated with a laser beam. In one embodiment of the present disclosure, an ultrashort pulse laser is applied. An SnO₂ layer, which can serve as the reactive layer, has extremely low excitation energy due to multiphoton absorption (for example, two-photon absorption) and is highly reactive. This also applies to an ITO layer, and the ITO layer can also serve as the reactive layer in the description.

As a result, in one example of the present disclosure, at least part of the SnO₂ layer (or ITO layer) sublimes or evaporates and disappears from the irradiation area together with the overlying SiO₂ layer. The reactive layer having relatively higher reactivity than the other layers included in the multilayer structure refers to the SnO₂ layer or the ITO layer according to the one example of the disclosure. This reactive layer may be set as a reactive layer having the highest reactivity compared to the other layers included in the multilayer structure.

Note that the topmost layer of the AR film having the multilayer structure is formed as a low refractive index layer (e.g., SiO₂ layer). Forming such an AR film can improve the visibility of the pattern formed by laser processing in the present aspect by the differences in visible light reflectance caused by irradiating with illumination light.

Further, the bottommost layer (on the base material side) of the multilayer structure is also preferably a low refractive index layer (e.g., SiO₂ layer).

The AR film may be formed using, for example, ion-assisted deposition.

A water-repellent film may be formed on the low refractive index layer at the topmost layer of the AR film. The water-repellent film may also be referred to as an antifouling film. The water-repellent film may be formed before or after marking according to the present embodiment.

The water-repellent film is a film that provides water repellency to a surface and can be formed by applying a fluorine-based compound solution such as metaxylene hexafluoride, for example.

The water-repellent film may be formed by, for example, ion-assisted vapor deposition, like the AR film.

Furthermore, another functional layer may be formed on the AR film. Whether or not such a functional layer contains a metal component is not a problem as long as precision etching by laser irradiation is possible. Furthermore, such a functional layer may be a uniform film or may be dispersed on the surface.

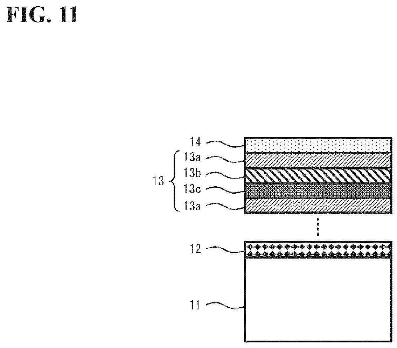

By undergoing the film forming process like that described above, a thin film having a layered structure like that shown in FIG. 11 is formed on the optical surface of the lens base material.

FIG. 11 is a side cross-sectional view of an example of the layered structure of the thin film according to the present embodiment.

The layered structure in the illustrated example is formed by an HC film 12, an AR film 13, and a water-repellent film 14 being layered in this order on the optical surface of a lens base material 11. The AR film 13 has a multilayer structure formed by layering an SiO₂ layer 13a, which is a low refractive index layer, and an SnO₂ layer 13b and a ZrO₂ layer 13c, which are high refractive index layers, with the topmost layer (i.e., the surface layer on the side of the water-repellent film 14) being the SiO₂ layer 13a.

Here, the SnO₂ layer is a high refractive index layer and also a reactive layer.

After the thin film is formed, the spectacle lens which the thin film is formed on will be marked with the edge outline 2M, cut to frame to match the contour of the cut lens shape 5, and marked with the decorative pattern 3, as shown in FIG. 10.

First, the edge outline 2M is marked on the spectacle lens after the thin film is formed. To mark the edge outline 2M, first, while the spectacle lens to be processed is in set in a blocked state, the work surface of the spectacle lens (specifically, the optical surface on the side not being blocked) is measured to determine the lens height at the work area on the work surface (i.e., the three-dimensional shape of the work area on the work surface) (S107). While a method of measurement is not particularly limited, taking measurements using a non-contact three-dimensional measuring machine, for example, is conceivable.

The work area is a region including a laser scan region, which will be described later.

After the lens height at the work area is measured, laser processing is carried out to irradiate the work area with a laser beam, along with a raster scan moving the laser beam irradiation position based on pattern data prepared in advance (i.e., contour data for the cut lens shape 5) (S108). A vector scan may be used instead of the raster scan. Furthermore, in the present embodiment, before being cut to frame, the spectacle lens is marked with the edge outline 2M based on the contour data for the frame shape.

If decorative etching will be carried out after the cut-to-frame process (S104: after cutting), first, blocking is carried out by setting one of the optical surfaces of the spectacle lens being processed (specifically, the optical surface that will not undergo decorative etching, which will be described later) into a dedicated chuck (S105). Then, the blocked spectacle lens is set in an edger, and the spectacle lens is edged (cut to frame) so that the outer shape of the spectacle lens is cut into a frame shape (S106). Since it will suffice to use publicly-known techniques for blocking and the cut-to-frame process, detailed explanations will be omitted here.

After the spectacle lens is cut to frame, decorative etching (that is, decorative pattern marking) is performed next. It will suffice for the details of decorative etching, and by extension, the details of laser processing for marking a decorative pattern, to be similar to that for marking the edge outline 2M.

After the decorative pattern is marked, the spectacle lens is deblocked by being taken out from the dedicated chuck (S109), and the dismounted spectacle lens is cleaned to remove residue and deposits (foreign objects) produced by marking (S110). After a final inspection of the outer appearance of the lens (S111), manufacture of the spectacle lens is complete.

On the other hand, if, for example, the cut-to-frame process will be carried out after the edge outline 2M is marked and the decorative pattern 3 is etched (S104: before cutting), the spectacle lens to be processed will be blocked like in S105 (S112). Then, the work surface of the spectacle lens to be processed is measured to determine the lens height at the work area on the work surface (i.e., the three-dimensional shape of the work area on the work surface) (S113). The method of measurement is the same as when carrying out decorative etching after the cut-to-frame process, as described above.

After the lens height at the work area is measured, laser processing is carried out to irradiate the work area with a laser beam, along with a raster scan moving the laser beam irradiation position based on pattern data prepared in advance (S114). A vector scan may be used instead of the raster scan. As a result, a decorative pattern is marked on the work area on the work surface of the spectacle lens. Note that the details of laser processing for marking a decorative pattern will be described later.

After the edge outline 2M and the decorative pattern 3 are marked, the marked spectacle lens is cut to frame. That is, the blocked spectacle lens is set in an edger, and the spectacle lens is edged (cut to frame) so that the outer shape of the spectacle lens is cut into a frame shape (S115). After being cut to frame, the spectacle lens is deblocked by being removed from the dedicated chuck (S116), and the dismounted spectacle lens is cleaned to remove residue and deposits (foreign objects) produced by processing (S117). After a final inspection of the outer appearance of the lens (S118), manufacturing of the spectacle lens is complete.

### [2] Details of laser processing

Next, the laser processing for marking the edge outline 2M and marking the decorative pattern 3 will be explained in more detail.

In the present embodiment, a decorative pattern can be marked by irradiating the AR film 13 coating the optical surface of the lens base material 11 with a laser beam and partially removing specific layers including the SiO₂ layer 13a at the topmost layer of the AR film 13.

Specifically, when the laser beam having passed through the topmost SiO₂ layer reaches the underlying SnO₂ layer, the SnO₂ layer sublimes or evaporates due to the energy of the irradiation and disappears from the irradiated area together with the overlying SiO₂ layer. That is, specific layers including the topmost SiO₂ layer 13a are partially removed by laser processing using a laser beam. At this time, a decorative pattern becomes marked at the irradiated area through this material removal, which exposes an underlying high refractive index layer. The exposed high refractive index layer is, for example, the ZrO₂ layer 13c.

The SnO₂ layer 13b can be formed with a thin thickness (e.g., 3-20 nm, more preferably 3-10 nm). In the present aspect, the thickness is set to 5 nm.

Note that the SnO₂ layer functions as a reactive layer which has the highest reactivity to laser irradiation. This reactive layer preferably contains Sn and O, and in addition to SnO₂, ITO can also be used.

Furthermore, although it is indicated above that the SnO₂ layer is removed by sublimation or evaporation and that the underlying high refractive ZrO₂ layer is exposed at the irradiated area, the reactive layer does not necessarily need to be completely removed and may partially remain at the irradiated area. For example, the reactive layer may be at least partially removed in the thickness direction of the layer by laser irradiation. Furthermore, as another example of partial removal, the reactive layer may partially remain at the laser irradiated area by laser irradiation not only in the thickness direction of the layer but also when viewed from the laser application direction (front view). In the example of this paragraph, it is acceptable if ZrO₂ is only partially exposed. This is because, like ZrO₂, SnO₂ (or ITO) is also a highly refractive material, and even if the ZrO₂ is not completely exposed because of the SnO₂, no visibility problems will arise in a front view. Therefore, it will suffice to expose the underlying high refractive index layer below the reactive layer or the reactive layer if partially remaining along with the high refractive index layer.

The phenomenon that occurs during laser irradiation is believed to have the following mechanism laid out below. The reactive layer (SnO₂, ITO, etc.) is preferably a conductive layer that has higher conductivity than the other layers included in the layered structure.

In a study carried out by the inventor, it was found that the reactive layer formed from SnO₂ has a lower energy corresponding to a band gap and occurring due to excitation when subjected to laser irradiation under conditions to be described later, compared to the overlying (topmost) SiO₂ layer and the underlying ZrO₂ layer. As a result, the reactive layer formed from SnO₂ has a tendency to be the quickest to disappear by sublimation and evaporation among the adjacent overlying and underlying layers.

It is thought that the phenomenon of multiphoton absorption (for example, two-photon absorption) occurs here, making it possible to etch at extremely high energy efficiency. Furthermore, it is believed that the SnO₂ layer being a conductive layer has an advantageous effect at this time.

Note that regarding concerns that the underlying ZrO₂ below the SnO₂ may be damaged by evaporation and melting from the energy of irradiation after the SnO₂ disappears, it is possible to remove substantially only the reactive layer and overlying layer by controlling irradiation conditions to take advantage of the delay in damage progression. Furthermore, it was found to be advantageous to select ultrashort pulse lasers, which will be described later, for such precise etching control.

Here, a laser processing device used for laser processing will be briefly explained.

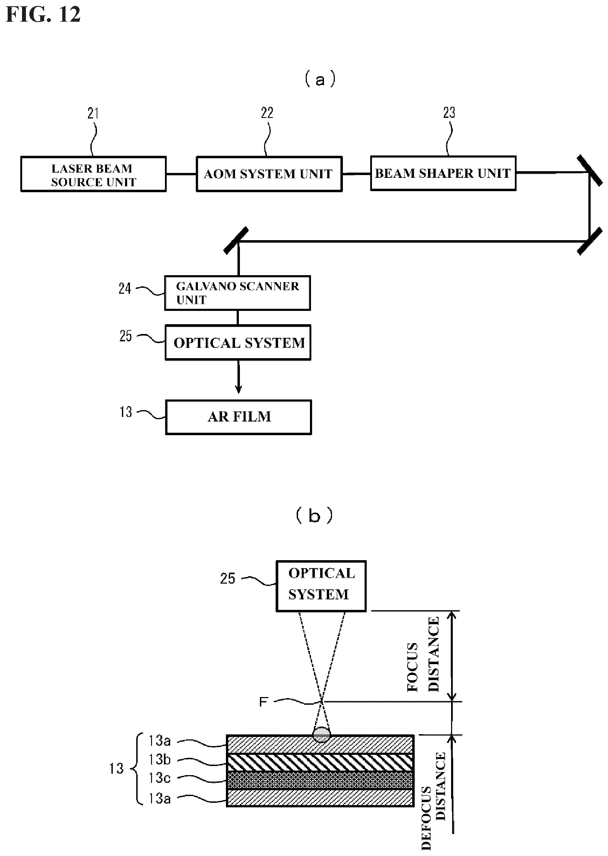

FIG. 12 is an explanatory view of a schematic configuration example of a laser processing device used in the method for manufacturing a spectacle lens according to the present embodiment.

As shown in FIG. 12(a), the laser processing device used in the present embodiment includes a laser beam source unit 21, an AOM (Acousto Optics Modulator) system unit 22, a beam shaper unit 23, a galvano scanner unit 24, and an optical system 25, and a laser beam is configured to be applied through each of units 21 to 25 onto the AR film 13.

The laser beam source unit 21 emits a laser beam used for laser processing and is configured to emit an ultrashort pulse laser.

**In** the present embodiment, although the lower limit value of a pulse width of the ultrashort pulse laser is not particularly limited so long as the lower limit exceeds 0 femtoseconds, a lower limit of 0.01 picoseconds (10 femtoseconds) or more is preferable, and pulse widths of 0.1 picoseconds or more (including pulse widths of 1 picosecond or more) are advantageous in equipment maintenance and cost and more favorable for commercial applications.

For example, ultrashort pulse lasers with a pulse width of 0.01 picoseconds (10 femtoseconds) or more to less than 100 picoseconds, preferably 0.01 picoseconds or more to less than 50 picoseconds, and more preferably 0.01 picoseconds or more to less than 15 picoseconds, can be used.

Furthermore, for example, ultrashort pulse lasers with a pulse width of 0.1 picoseconds or more to less than 100 picoseconds, preferably 0.1 picoseconds or more to less than 50 picoseconds, and more preferably 0.1 picoseconds or more to less than 15 picoseconds, can be used.

Furthermore, ultrashort pulse lasers with a pulse width of 0.01 picoseconds or more to less than 1 picosecond (or less than 0.1 picoseconds) can also be used.

For the wavelength of an ultrashort pulse laser, a fundamental wavelength of 1064 nm, in addition to 355 nm from THG (Third Harmonic Generation) or 532 nm from SHG (Second Harmonic Generation), can be used, for example. The irradiation beam diameter for irradiation can be selected according to the desired design to be added. Restricting the beam diameter to a small diameter is effective when adding fine designs with high resolution, and shorter wavelengths are more advantageous in such cases, A wavelength of 532 nm is preferable and 355 nm is more preferable among the above wavelengths. Alternatively, a wavelength of 266 nm from FHG (Fourth Harmonic Generation) is also favorable.

The pulse energy of the ultrashort pulse laser is, for example, 0.1 µJ or more to 30 µJ or less (maximum about 60 µJ) at 50 kHz. The beam diameter of the ultrashort pulse laser is, for example, 10 µm or more to 30 µm or less.

The following findings were made regarding the laser irradiation conditions in the study carried out by the inventor.
(1) When the pulse width of an ultrashort pulse laser is less than 0.1 picoseconds:
   Etching can be satisfactorily performed at any wavelength from 266-1064 nm. Shorter wavelengths are more advantageous for fine etching. However, there is a large production burden in equipment maintenance and costs.
(2) When the pulse width of an ultrashort pulse laser is 0.1 picoseconds or more to less than 1 picosecond:
   Etching can be satisfactorily performed at any wavelength from 266-1064 nm. Shorter wavelengths are more advantageous for fine etching.
(3) When the pulse width of an ultrashort pulse laser is 1 picosecond or more to less than 100 picoseconds:
   Etching can be satisfactorily performed at any wavelength from 266-1064 nm. Shorter wavelengths are more advantageous for fine etching. Favorable in equipment maintenance, costs, production condition stability, etc.
(4) When the pulse width of an ultrashort pulse laser is 100 picoseconds or more to less than 1 nanosecond:
   Depending on the wavelength that is used, there may be inconsistency in the stability of the etch. For example, if a short wavelength of 266 nm is used as the wavelength, not only will there be a reaction from the SnO₂, but the lower layers will be more susceptible to damage. Furthermore, slight variations in irradiation conditions at even 355 nm can invite a loss of uniformity in the etch, making it not possible to prevent material removal from reaching the underlying layer below the SnO₂ layer.
(5) When the pulse width of an ultrashort pulse laser is 1 nanosecond or more:
   Etching to selectively remove the SnO₂ and the overlying layers above will not be possible.

In (4) and (5), the visibility of the etched pattern will be affected. For example, there is the risk that the spectacle lens will interfere with the field of vision of the wearer. Furthermore, the formed decorative pattern when being observed is prone to being in a not-fully-visible state in which the pattern will not be perceivable as the pattern to the observer depending on the illumination conditions.

In order to prevent the above inconveniences, it is vital to ensure that material removal via the ultrashort pulse laser is consistent with regard to etching diameter and etching depth, and to do that, it is considered effective to use specific ultrashort pulse widths to control and take advantage of the duration of energy application from irradiation and the delay in ablation at the underlying layer material.

As long as such an ultrashort pulse laser can be emitted, there is no particular limitation to the specific configuration of the laser beam source unit 21 or to combinations of wavelength and pulse width.

The AOM system unit 22 keeps the laser beam from being excessively irradiated, which is a cause of uneven etching during laser processing, by canceling the beam output of the laser beam immediately after the operation of the galvano scanner unit 24 starts and just before the operation ends.

The beam shaper unit 23 is able to achieve laser processing using a laser beam with uniform energy distribution by converting the laser beam from the laser beam source unit 21 from a Gaussian energy distribution to a top-hat energy distribution.

Particularly, using a top-hat distribution ensures stable and uniform etching when multiple beam spots are partially overlapped to form an etching region with a specific area. This is because local excessive energy application that would be caused by overlapping spots is controlled.

The galvano scanner unit 24 is able to two-dimensionally or three-dimensionally move the irradiation position of the laser beam from the laser beam source unit 21 and thereby scan by the laser beam, making it possible to mark a desired pattern by laser processing. Note that the laser scannable range (i.e., the maximum laser work area) 4 by the galvano scanner unit 24 is set to a size and shape that can completely encompass the outer shape of the spectacle lens being processed (see FIG. 8).

The optical system 25 is formed from a combination of optical lenses, such as a telecentric lens, and a mirror and guides the laser beam from the laser beam source unit 21 so that the laser beam reaches the work area of the spectacle lens.

Furthermore, as shown in FIG. 12(b), the laser processing device used in the present embodiment is configured so that the laser beam (i.e., ultrashort pulse laser) can be applied to the AR film 13 via the optical system 25 etc., with a defocus setting. The defocus setting sets a focal position F of the laser beam to be applied to a specific defocus distance away from the surface of the AR film 13, which is the work area to be etched by the laser beam. When the laser beam is applied with such a defocus setting, the beam energy can be dispersed on the surface of the AR film 13 that is irradiated with the laser beam, making uniform film removal possible. This is extremely useful, particularly when there may be variations in the height of the area being irradiated due to the surface shape of the AR film 13. However, settings are not necessarily limited to the defocus setting, and a laser beam may be applied with, for example, a focus setting, in which the focal position F matches the surface of the AR film 13, or an in-focus setting, in which the focal position F is moved away in the opposite direction from the defocus setting.

Next, the steps for laser processing using the laser processing device with the above configuration will be explained.

In laser processing, first, the spectacle lens to be processed is set in the laser processing device. At this time, the spectacle lens is set so that the optical surface of the spectacle lens, more specifically, the surface of the AR film 13 on the optical surface, is the work surface. The optical surface that is treated as the work surface may be either the object-side surface or eye-side surface, but in this case, the eye-side surface is the work surface, for example.

After setting the spectacle lens, the laser beam source unit 21 and the galvano scanner unit 24 are operated based on pattern data prepared in advance (i.e. pattern data with a specific resolution created based on the decorative pattern to be obtained). Thereby, the work area on the work surface of the spectacle lens is irradiated with an ultrashort pulse laser in a pattern shape corresponding to the decorative pattern.

When the ultrashort pulse laser is applied, the ultrashort pulse laser passes through the water-repellent film 14 on the work surface of the spectacle lens and arrives at the AR film 13 on the work surface. When the ultrashort pulse laser reaches the AR film 13, non-thermal etching of the AR film 13 is carried out by the ultrashort pulse laser.

Ablation in the present aspect is a technique that uses the multiphoton absorption of an ultrashort pulse laser to etch at high energy efficiency. More specifically, ablation is a material removal process in which the location irradiated by the laser beam instantly melts, evaporates, or sublimes and scatters, minimizing the thermal impact on the area around the work area. Since such non-thermal etching instantly removes highly reactive material at the irradiated area, there is little thermal impact on the area surrounding the work area, and it is possible to carry out etching with minimal thermal damage (deformation due to heat, etc.).

The laser processing according to the present embodiment can be ablation as a non-thermal etching. Such etching causes a multiphoton absorption process (e.g., two-photon absorption process) that induces the multiphoton absorption described above. Therefore, even a material that is relatively transparent (having high transmittance) to lasers can be etched efficiently and favorably by multiphoton absorption. In this case, there is a broad range of usable laser wavelengths, and 1064 nm can be advantageously used, in addition to 355 nm (THG) and 532 nm (SHG), as the wavelength of the laser beam.

As described above, picosecond lasers and femtosecond lasers, which have short pulse widths are advantageous for inducing multiphoton absorption. As specific numerical values, the pulse width can be less than 100 picoseconds, preferably less than 50 picoseconds, and more preferably less than 1 picosecond (i.e., femtoseconds), for example.

When non-thermal etching by ultrashort pulse laser irradiation is being carried out, the laser beam passes through the SiO₂ of the multilayer structure of the AR film 13 and arrives at the reactive layer (SnO₂ in the present aspect), upon which the reactive layer instantly reacts and sublimes/evaporates and the topmost SiO₂ layer 13a is removed. It is in this manner that only specific layers including the topmost surface layer of the anti-reflection film are partially removed in a pattern shape corresponding to the decorative pattern. Furthermore, the corresponding portion of the water-repellent film 14 is also removed through this process. As a result, the underlying ZrO₂ layer 13c below the SnO₂ layer 13b is exposed at the irradiated area.

Since laser processing carried out in the above manner partially removes specific layers including the SiO₂ layer 13a at the topmost layer of the AR film 13 (forms material removal area) and exposes the ZrO₂ layer 13c, which is functioning as a high refractive index layer, a decorative pattern will be marked on the work surface of the spectacle lens.

In this manner, the irradiated area where the specific laser was applied is partially etched within the work surface.

The visible light (380 nm to 780 nm) transmittance of the edge outline 2M and decorative pattern 3 can be 80% or more, for example, 80% to 95%, 80-90%, or 80-85%. Furthermore, the value of the visible light (380 nm to 780 nm) transmittance of the edge outline 2M and decorative pattern 3 minus the visible light transmittance at the other regions than the edge outline 2M and decorative pattern 3 is 20% or less, 15% or less, or 10% or less. These features allow the edge outline 2M and decorative pattern 3 if entering the field of vision of the wearer to be less likely to be obtrusive to the field of vision and can achieve a wide and bright field of vision.

### [3] Configuration of spectacle lens

Next, the configuration of the spectacle lens obtained by the manufacturing method according to the steps described above, that is, the configuration of the spectacle lens according to the present embodiment, will be specifically explained.

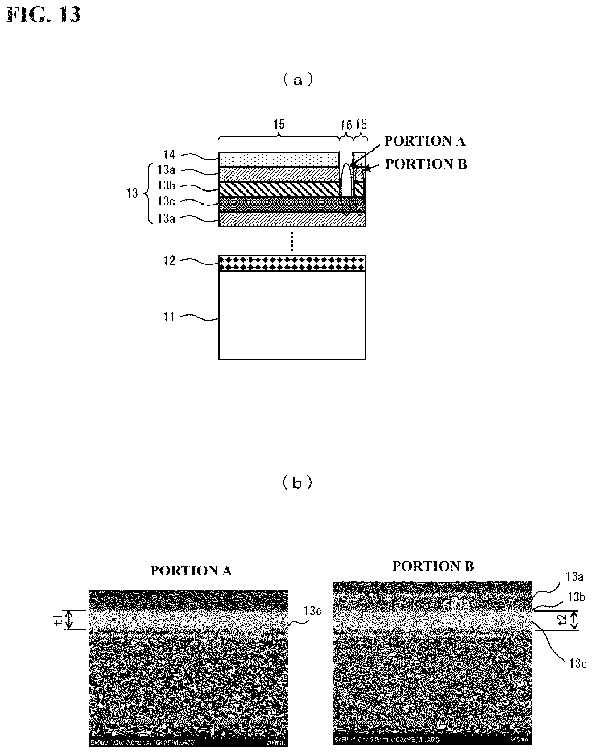

FIG. 13(a) is an explanatory view of a configuration example of the principal constituent parts of the spectacle lens according to the present embodiment.

FIG. 13(b) shows a specific example of the result of observing a cross section of the AR film 13 by an electron microscope. The illustrated example is an enlarged view of portions A and B in FIG. 13(a) and shows electron microscope images of a laser scan region 16 and a non-etching region 15.

As shown in FIG. 13(a), the spectacle lens according to the present embodiment is formed by layering the HC film 12, the AR film 13, and the water-repellent film 14 in this order on the optical surface of the lens base material 11. Furthermore, the AR film 13 has a multilayer structure formed by layering an SiO₂ layer 13a, which is a low refractive index layer, and an SnO₂ layer 13b and ZrO₂ layer 13c, which are high refractive index layers, and is configured such that specific layers including the SiO₂ layer 13a at the topmost layer of the multilayer structure (specifically, the SnO₂ layer, which is a reactive layer, and the overlying layers above) are partially removed to expose the ZrO₂ layer 13c, which is a high refractive index layer. That is, the spectacle lens according to the present embodiment is configured such that the optical surface of the lens base material 11 is provided with the non-etching region 15 coated with the HC film 12, AR film 13, and water-repellent film 14 and the laser scan region (patterned region) 16 where the topmost SiO₂ layer 13a of the AR film 13, the underlying SnO₂ layer 13b immediately below the SiO₂ layer 13a, and the water-repellent film 14 are partially removed to expose the ZrO₂ layer 13c, which is a high refractive index layer.

The non-etching region 15 and the laser scan region 16 have different light reflectance due to the presence or absence of the SiO₂ layer 13a because one of the regions is coated with the SiO₂ layer 13a while the ZrO₂ layer 13c (or the reactive layer, which is a high refractive index layer, when the reactive layer partially remains) is exposed at the other of the regions. Therefore, when the spectacle lens is viewed while there is lighting, the pattern shape formed by the laser scan region 16 will be visible. That is, if the laser scan region 16 is formed in a pattern shape corresponding to a decorative pattern, the decorative pattern will be visible. Thus, the material removal area of the specific layers of the AR film 13 can be used to form the decorative pattern.

The reflectance of the edge outline 2M and the decorative pattern 3 preferably is higher than the reflectance of the other regions. That is, a configuration may be provided in which both of the edge outline 2M and the decorative pattern 3 expose the ZrO₂ layer 13c, which is a high refractive index layer.

The laser scan region 16 forming the decorative pattern is formed by removing the SiO₂ layer 13a, which is the topmost layer of the AR film 13, and the SnO₂ layer 13b, which is the underlying layer immediately below the SiO₂ layer 13a. That is, material removal is restricted to specific layers including the SnO₂ layer, which is a reactive layer. This makes it possible to keep any of the layers of the multilayer structure of the AR film 13 from peeling as a result of forming of the laser scan region 16.

As described above, the SiO₂ layer 13a, which is the topmost layer of the AR film 13, can be removed by non-thermal etching using ultrashort pulse laser irradiation. Such non-thermal etching has little thermal impact on the area surrounding the work area and can minimize thermal damage. Furthermore, using the specific pulse widths described above can minimize the damage to the underlying layer below the reactive layer while allowing for stable etching. This exposes the ZrO₂ layer 13c as a high refractive index layer but also can limit damage to the exposed surface of the ZrO₂ layer 13c.

By limiting damage to the exposed surface of the ZrO₂ layer 13c, it is possible to also keep the film thickness of the ZrO₂ layer 13c from decreasing from material removal. The thicknesses of the SiO₂ layer 13a, SnO₂ layer 13b, ZrO₂ layer 13c, etc., can be identified by acquiring an electron microscope image of the cross section of the AR film 13 and analyzing the acquired image.

FIG. 13(b) shows a specific example of the result of observing a cross section of the AR film 13 by an electron microscope. The illustrated example is an enlarged view of portions A and B in FIG. 13(a) and shows electron microscope images of the laser scan region 16 and the non-etching region 15. Note that while there is the SiO₂ layer 13a, SnO₂ layer 13b, and ZrO₂ layer 13c layered in the non-etching region 15, the SnO₂ layer 13b is difficult to notice in the image because of the thinness (which is about 5 nm, for example). On the other hand, the SnO₂ layer 13b and overlying SiO₂ are removed from the laser scan region 16, exposing the ZrO₂ layer 13c.

It can be seen from the illustrated electron microscope images that there is no significant difference between a thickness t1 of the laser scan region 16 portion and a thickness t2 of the non-etching region 15 portion of the ZrO₂ layer 13c exposed by the removal of the SnO₂ and the overlying layers. More specifically, a ratio t1/t2 of the thickness t1 of the material removal area to the thickness t2 of the non-material removal area is, for example, within the range of 0.90 or more to 1.00 or less, preferably 0.95 or more to 1.00 or less, and more preferably, 0.99 or more to 1.00 or less.

Thus, the exposed ZrO₂ layer 13c, which is a high refractive index layer, will not experience a decrease in thickness from material removal or may experience a decrease but by an amount that is kept extremely small. This is because the laser scan region 16 is formed by non-thermal etching using ultrashort pulse laser irradiation, causing no damage to the underlying ZrO₂ layer 13c. This means that as long as the thickness ratio t1/t2 of the exposed ZrO₂ layer 13c is within the above ranges, it can be inferred that the laser scan region 16 had been formed without damage to the ZrO₂ layer 13c and that the laser scan region 16 had been formed by non-thermal etching using an ultrashort pulse laser.

The reason why there is no damage to the ZrO₂ layer 13 is because the reactivity of the reactive layer (the SnO₂ layer here) as induced by ultrashort pulse lasers is higher than that of the ZrO₂. This difference in reactivity will become prominent when using an ultrashort pulse laser with specific pulse widths, which will be described later.

Note that by setting the thickness of the ZrO₂ layer to be 10 times or more, preferably 15 times or more the thickness of the SnO₂ layer, even if there is a slight reduction in the film thickness of the ZrO₂ layer after the SnO₂ layer disappears, there will be no risk of film peeling or effect on the visibility of the decorative pattern.

Furthermore, it is conceivable that the melting point of SnO₂ being about 1127°C and lower than that of the overlying SiO₂ and the underlying ZrO₂ is involved in facilitating ablation control.

According to the spectacle lens configured in the above manner, even when there is a decorative pattern marked thereon, the layers of the AR film 13 of the multilayer structure can be kept from peeling and the exposed ZrO₂ layer 13c will be free of damage. Therefore, even in application on a spectacle lens intended as a product, a decorative pattern can be marked on the spectacle lens without decreasing the quality of the product.

### [4] Effects of present embodiment

According to the present embodiment, first, the following advantage is exhibited.

One advantageous effect is that the aesthetic appeal of the spectacle lens (cut lens) 1A after being edged (after being fit into a frame) can be improved.

Furthermore, the following effect can be obtained.

In the spectacle lens according to the present embodiment, the edge outline 2M would be present at the time of edging, and the spectacle lens would only be discarded when there is a defect on the inside of the edge outline 2M. As a result, it is possible to use spectacle lenses that would have been discard in the past. This effect is applicable to the spectacle lens according to the present embodiment and is also applicable to the method for manufacturing a spectacle lens.

The method for manufacturing a spectacle lens according to the present embodiment also has the advantage of allowing logos, brand marks, or other icons to be marked in the same process as the edge outline 2M when such icons are to be applied.

More specifically, one or more of the following effects can be obtained.
(a) In the present embodiment, the AR film 13, which is one of the thin films covering the optical surface of the lens base material 11, is etched so that the reactive layer (SnO₂ in the above aspect) of the AR film 13 and the overlying layer are partially removed, exposing the ZrO₂ layer 13c, which is a high refractive index layer, and thus marking a decorative pattern on the spectacle lens.
(b) In the present embodiment, non-thermal etching by ultrashort pulse laser irradiation is carried out to partially remove the reactive layer (SnO₂ in the above aspect) of the AR film 13 and the overlying layer, exposing the ZrO₂ layer 13c, which is a high refractive index layer, and thus marking a decorative pattern on the spectacle lens. This non-thermal etching is material removal making use of the effects of pulse width more than the effect of the absorption energy of the laser beam and is thus able to selectively and uniformly remove only specific layers including the SiO₂ layer 13a at the topmost layer of the AR film 13. Furthermore, as this etching is non-thermal, thermal damage can be kept from occurring in the area around the work area, making it possible to limit damage to the exposed surface of the underlying ZrO₂ layer 13c below the reactive layer.
(c) As described above, in the present embodiment, specific layers including the topmost layer of the AR film 13 are removed while using an ultrashort pulse laser, exposing the high refractive index layer and thus marking a decorative pattern on the spectacle lens. Because the layers of the AR film 13 can be kept from peeling and the exposed ZrO₂ layer 13c will be free of damage according to the present embodiment, even for application on a spectacle lens intended as a product, a decorative pattern can be marked on the spectacle lens without decreasing the quality of the product.
(d) In the present embodiment, it will suffice for the pulse width of the ultrashort pulse laser to exceed 0 femtoseconds, but a range of 0.01 picoseconds (10 femtoseconds) or more to less than 100 picoseconds is preferable, and pulse widths of 0.1 picoseconds or more (including pulse widths of 1 picosecond or more) are advantageous in equipment maintenance and cost and more favorable for commercial applications.
   More specifically, the following advantages exist depending on the pulse width for the laser application conditions.
   (1) When the pulse width of an ultrashort pulse laser is less than 0.1 picoseconds:
      Etching can be satisfactorily performed at any wavelength from 266-1064 nm. Shorter wavelengths are more advantageous for fine etching. However, there is a large production burden in equipment maintenance and costs.
   (2) When the pulse width of an ultrashort pulse laser is 0.1 picoseconds or more to less than 1 picosecond:
      Etching can be satisfactorily performed at any wavelength from 266-1064 nm. Shorter wavelengths are more advantageous for fine etching.
   (3) When the pulse width of an ultrashort pulse laser is 1 picosecond or more to less than 100 picoseconds:
      Etching can be satisfactorily performed at any wavelength from 266-1064 nm. Shorter wavelengths are more advantageous for fine etching. Favorable in equipment maintenance, costs, production condition stability, etc.
(e) In the present embodiment, when carrying out not-thermal etching by ultrashort pulse laser irradiation, the ultrashort pulse laser can be applied to the AR film 13 with a defocus setting. When the laser beam is applied with such a defocus setting, the beam energy can be dispersed on the surface of the AR film 13 that is irradiated with the laser beam, making uniform film removal possible. This is extremely useful, particularly when there may be variations in the height of the area being irradiated due to the surface shape of the AR film 13.
(f) In the present embodiment, carrying out non-thermal etching by ultrashort pulse laser irradiation under specific conditions limits damage to the exposed surface of the ZrO₂ layer 13c, which is a high refractive index layer, exposed by the removal of SnO₂ and the overlying layers. Specifically, the ratio t1/t2 of the thickness t1 of the ZrO₂ layer 13c at the material removal area to the thickness t2 of the ZrO₂ layer 13c at a non-material removal area where the SiO₂ layer 13a is not removed is, for example, within the range of 0.90 or more to 1.00 or less, preferably 0.95 or more to 1.00 or less, and more preferably, 0.99 or more to 1.00 or less. Thus, the ZrO₂ layer 13c will not experience a decrease in film thickness from material removal or may experience a decrease but by an amount that is kept extremely small. Therefore, even for application on a spectacle lens intended as a product, this technique is extremely favorable for marking a decorative pattern on the spectacle lens without decreasing the quality of the product.

### [5] Modified examples, etc.

The disclosures provided for the present disclosure above illustrate exemplary embodiments of the present disclosure. That is, the technical scope of the present disclosure is not limited to these exemplary embodiments and can be modified in various ways without departing from the spirit of the disclosure.

The embodiments described above illustrate cases of applying non-thermal etching using an ultrashort pulse laser to mark the edge outline 2M (and decorative pattern 3), but the present disclosure is not limited to such cases. That is, any application of non-thermal etching using an ultrashort pulse laser is acceptable so long as some form of patterning is applied to the optical surface of the optical member, and this can be applied in exactly the same way for markings other than the edge outline 2M (and decorative pattern 3).

The embodiments described above illustrate cases where the topmost surface of the AR film 13 is the SiO₂ layer 13a functioning as a low refractive index layer, the underlying layer below the SiO₂ layer 13a is a reactive SnO₂ layer 13b functioning as a high refractive index layer, and the underlying layer further below is a ZrO₂ layer 13c functioning as a high refractive index layer, with the SnO₂ reacting to laser irradiation and partially being removed, together with the SiO₂, thus exposing the ZrO₂ layer 13c as a high refractive index layer. However, the present disclosure is not limited to such cases. The AR film 13 may be formed by layering layers other than the SiO₂ layer 13a, SnO₂ layer 13b, and ZrO₂ layer 13c. Furthermore, the topmost layer of the AR film 13 may be a layer other than the SiO₂ layer 13a, so long as that layer is a low refractive index layer. The high refractive index layers may be layers other than the SnO₂ layer 13b or ZrO₂ layer 13c. For example, the SnO₂ layer 13b functioning as a reactive layer may be substituted with a thin ITO layer having conductivity.

The embodiments described above illustrate cases where the reactive SnO₂ layer included in the AR film 13 and the topmost SiO₂ layer 13a directly above are removed by non-thermal etching using an ultrashort pulse laser. Therefore, as was already indicated, the effect of being able to keep film from peeling is demonstrated. Thus, non-thermal etching using an ultrashort pulse laser is capable of removing multiple specific layers including the topmost layer. Even in cases where multiple layers including the topmost layer are being removed, since non-thermal etching using an ultrashort pulse laser is able to limit damage to the exposed surface of the layer that will be exposed by material removal, such etching will also be able to keep film thickness from decreasing from material removal. That is, even in cases where multiple layers including the topmost layer are being removed, the ratio t1/t2 of the thickness t1 of the material removal area to the thickness t2 of the non-material removal area for the underlying layer directly below the removed layers will be, for example, within the range of 0.90 or more to 1.00 or less, preferably 0.95 or more to 1.00 or less, and more preferably, 0.99 or more to 1.00 or less.

A spectacle lens before laser processing according to the present embodiment may be provided with an anti-reflective film on both surfaces. One specific example of this spectacle lens is described in International Publication No. WO2020/067407. The details of that publication can be fully referred to in the description. In particular, spectacle lenses with the features of examples 1 and 2 (example 1 if only one example were to be selected) of the publication may be used as specific examples. A specific example of the spectacle lens before decoration in the present embodiment has the following features.

The specific example of the spectacle lens is
a spectacle lens provided with a multilayer film on both surfaces of a lens base material, wherein
the sum of the average reflectance of the surfaces of the spectacle lens at wavelengths of 360-400 nm is 6.0% or less,
the sum of the average reflectance of the surfaces of the spectacle lens at wavelengths of 400-440 nm is 20.0% or more, and
the sum of the average reflectance of the surfaces of the spectacle lens at wavelengths of 480-680 nm is 2.0% or less.

That is, the sum of the average reflectance of the surfaces for light in the blue range, particularly light in the violet range (400-440 nm) which should be blocked, is 20.0% or more (preferably more than 20.0%, and more preferably 25.0% or more). That is, reflectance is locally increased in the violet range.

In contrast, the sum of the average reflectance of the surfaces at the ultraviolet range or the lower wavelength side of the violet range (360-400 nm) is 6.0% or less (preferably less than 6.0%, and more preferably 5.0% or less), resulting in a local decrease in reflectance, which is the opposite of the case in the violet range (400-440 nm).

Furthermore, the sum of the average reflectance of the surfaces at the higher wavelength side of the blue wavelength range or the red range (480-680 nm) is 2.0% or less (preferably less than 2.0%, and more preferably 1.5% or less), resulting in a local increase in reflectance at the main wavelength band of visible light in order to allow visible light to pass through.

This specific example ensures that there is a blocking effect on light in the blue range while also allowing visible light to pass through.

When the spectacle lens of this specific example undergoes the laser processing according to the present embodiment, the following advantageous effects are exhibited. The spectacle lens of this specific example has a blocking effect on light in the blue range, that is, a high reflectance for light in the blue range. Therefore, when the spectacle lens 1 is seen by a third person in front of the wearer of the spectacle lens 1, the spectacle lens will appear to be blue. On the other hand, the area where laser processing was applied (decorative pattern 3) will appear in the color of the layer exposed by laser processing (the color of the ZrO₂ layer is yellow or gold, or silver in this specific example). As a result, the decorative pattern 3 on the spectacle lens 1 fit into a frame will appear prominently on a blue background when seen by a third person in front of the wearer of the spectacle lens 1. In this case, the decorative pattern 3 with high aesthetic appeal will be achieved. This will also be the same even if the background is not blue, that is, even if the reflectance for light in other color ranges, and not the blue range, is high. Examples of background colors include the spectacle lens 1 being green or having a pearl-like color when the spectacle lens 1 is seen by a third person in front of the wearer of the spectacle lens 1.

A favorable aspect of contrast when the decorative pattern 3 is viewed can be achieved regardless of whether laser processing is applied to the multi-layer films on the object-side surface of the spectacle lens or to the multiplayer films on the eye-side surface.

Note that there will be substantially no interference to the field of vision of the wearer caused by the decorative pattern entering the field of vision, regardless of which surface's multilayer film has undergone laser processing. That is, a spectacle lens with the decorative pattern 3 according to the present aspect will not obstruct the clear field of vision of the wearer.

Accordingly, the portions where the edge outline and decorative pattern of the present aspect are formed have, as described above, high transmittance for visible light and will not be substantially noticed, even if inside the field of vision of the wearer, due to the small difference in transmittance with respect to the portions where there is no decorative pattern and the like.

For example, when the present aspect is applied to rimless or half-rim spectacles, there will be the following advantage. That is, an imitation rim could be drawn for rimless or half-rim spectacles in the vicinity of the outer edge of the lenses thereof using known pigments and other coloring materials or created by forming surface features on the lens surface. In addition, the edge outline of the present aspect, which is formed by the laser irradiation described above, is advantageous in that the outline frees the wearer from the constraints that would be experienced from wearing rimmed spectacles, that is, the feeling of the field of vision being confined to a certain area or of the outer edge of the field of vision being darker due to the rim, and makes it possible to experience a bright and wide field of vision.

Furthermore, when the lens of the wearer is being observed by another person (that is, when the lens of the wearer is being observed from the object side), the decorative pattern 3 can be seen clearly while the lens of the wearer is at specific relative positions (or angles) to the lighting in a room or to sunlight but will be harder to see when not at the relative position. Therefore, the lens can be provided with the added design value of having the specific decorative pattern 3 that can change in visibility from appearing clearly to practically vanishing.

On the other hand, when the lens is not in the specific relative positional relationship, the lens will be perceived as a regular, clear lens (or specific color lens, photochromic lens, or polarized lens) when seen by another person. Therefore, the lens can be seen clearly, without part of the face of the wearer being blocked or shadows being casted by the rim, which could happen in rimmed spectacles.

The decorative pattern 3 of the present aspect will not affect the functionality of the spectacles even when formed within the cut-to-frame lens region and allows desired text characters, symbols, or patterns to be supported on the lens or a desired design to be applied to the lens.

The decorative pattern 3 of the present aspect is applied in a manner that allows the pattern to be visible from either the work surface of the lens or the reverse surface. This is because the designed anti-reflective properties are reduced at the material removal area where part of the multilayer anti-reflective film (the SnO₂ and the overlying SiO₂ in the present aspect) has been removed, producing a contrast from the non-material removal area in the amount of reflected light.

In the present embodiment, an edge outline being provided on the cut lens shape itself constitutes a significant feature. With this in mind, the edge outline would not necessarily have to be formed by exposing part of the anti-reflective film. From this viewpoint, the present embodiment can also be expressed in the following manner. The features described up to now may also be combined with the expressions below.

"A spectacle lens prior to being cut out into a cut lens shape for fitting into a frame, wherein
the spectacle lens is marked with an edge outline which outlines the contour of the cut lens shape, indicative of a planned cutting position, from the inside."

"Spectacles provided with a frame and a spectacle lens marked with an edge outline which outlines the outer edge."

### Description of signs and numerals

1... Spectacle lens (before edging), 1A... Spectacle lens (cut lens) (after edging), 2... Rim shape, 2F... Frame, 2M... Marking (edge outline), 3... Decorative pattern, 4... Scannable range, 5... Cut lens shape, 11... Lens base material (optical base material), 12... HC film, 13... AR film, 13a... SiO₂ layer (low refractive index layer), 13b... SnO₂ layer (high refractive index layer), 13c... ZrO₂ layer (high refractive index layer), 14... Water-repellant film, 15... Non-etching region, 16... Laser scan region (patterned region), 21... Laser beam source unit, 22... AOM system unit, 23... Beam shaper unit, 24... Galvano scanner unit, 25... Optical system

## Claims

1. A spectacle lens provided with
a lens base material with an optical surface and
an anti-reflective film coating the optical surface of the lens base material, wherein
the anti-reflective film has a multilayer structure including a low refractive index layer and a high refractive index layer layered on each other,
the anti-reflective film is provided with a reactive layer that has relatively higher reactivity to ultrashort pulse laser irradiation than the other layers included in the anti-reflective film, and
a marking is applied in a cut lens-like shape in a material removal area formed by at least partially removing one or more specific layers including a topmost layer of the multilayer structure, wherein in the marking, the material removal area is visible due to visible light as a result of exposure of the high refractive index layer below the reactive layer or exposure of the reactive layer having partially remained.

2. The spectacle lens according to claim 1, wherein
the material removal area also forms a decorative pattern other than the cut lens-like marking.

3. The spectacle lens according to claim 2, wherein
the decorative pattern is applied on an end on the inside of the cut lens-like marking.

4. The spectacle lens according to any one of claims 1-3, wherein
the cut lens-like marking is ring-shaped.

5. Spectacles provided with
cut spectacle lenses to which an edge outline which outlines an outer edge is applied and
a frame into which the cut spectacle lenses are fit, wherein
each of the spectacle lenses is provided with
a lens base material with an optical surface, and
an anti-reflective film coating the optical surface of the lens base material,
the anti-reflective film has a multilayer structure including a low refractive index layer and a high refractive index layer layered on each other,
the anti-reflective film is provided with a reactive layer that has relatively higher reactivity to ultrashort pulse laser irradiation than the other layers included in the anti-reflective film,
a marking is applied as the edge outline in a material removal area formed by at least partially removing one or more specific layers including a topmost layer of the multilayer structure, wherein in the marking, the material removal area is visible due to visible light as a result of exposure of the high refractive index layer below the reactive layer or exposure of the reactive layer having partially remained, and
the edge outline is visible when observed from an object side of the spectacle lenses in a state in which the spectacle lenses are fit into the frame.

6. The spectacles according to claim 5, wherein
the material removal area also forms a decorative pattern other than the edge outline.

7. The spectacles according to claim 6, wherein
the decorative pattern is applied on an end on the inside of the edge outline.

8. The spectacles according to any one of claims 5-7, wherein
the edge outline is ring-shaped.

9. The spectacles according to any one of claims 5-7, wherein
the frame is rimless or has a half-rim, and
the edge outline is marked as an imitation rim at least at areas where the rim is not present.
